# EUROPEAN PATENT APPLICATION

(11) **EP 4 383 123 A1**
(43) Date of publication of application: **12.06.2024**
(21) Application number: 23020545.2
(22) Date of filing: 11.12.2023
(51) Int. Cl.: G06F 40/30, G06N 3/08, G06F 40/216, G06F 40/289

(54) **METHOD FOR AUTOMATIC INTENT SUGGESTION**

(30) Priority: 09.12.2022 PT 2022118382
(71) Applicant: Altice Labs, S.A., 3810-106 Aveiro (PT)
(72) Inventor: SILVA FURÃO, Sara Da, 3810-106 Aveiro (PT); RODRIGUES MARTINS INÁCIO, Sara Filipa, 3810-106 Aveiro (PT)
(74) Representative: Arnaut, José Luis

(57) **Abstract**

The present invention provides a Natural Language Processing solution based on a method that automatically suggests an intention for a fallback utterance. Given a conversational agent composed by a set of training phrases and a collection of previously occurring interactions that lead to fallback, a similarity search is conducted, retrieving the most similar training phrase per fallback. From that training phrase, the corresponding intent is retrieved and posed as a suggestion of where to add the fallback in the form of a new training phrase. This method allows for a reduced number of interactions that lead to fallback, thus constantly improving the conversational agent's performance.

## Description

### FIELD OF THE INVENTION

The present invention is enclosed in the technical area of Natural Language Processing. Specifically, it belongs to conversational artificial intelligence field, relating to Natural Language Understanding systems and the process of minimizing non-recognized interactions with a conversational agent.

### PRIOR ART

Conversational Natural Language Understanding (CNLU) systems aid computers understanding and interpreting language by decomposing and classifying speech in relevant elements, such as intents and entities. Whilst intents represent an action that a user wants to perform through an utterance by extracting the purpose or goal behind it, entities specify and retrieve useful information from that same utterance, such as parameters required to execute the action.

Conversational systems have constant interaction with users by communicating through natural language. Whether it being in textual or verbal form, speech can often vary from user to user, with the differences ranging from misspelled words to differently formed sentences.

Intents are usually composed by a collection of training phrases, instances of user utterances that represent the purpose or goal behind the respective intent. However, the amount of possible speech variations leads to an inevitable non-recognition of some user interactions by the system. Most current conversational systems, when unable to recognize an interaction, lead to fallback, usually asking the user to repeat or rephrase.

### PROBLEM TO BE SOLVED

An intent is composed by training phrases that portray instances of user utterances expressing the respective purpose or goal behind it. Given the vast speech variations, it is unfeasible to define an intent composed by training phrases that are able to represent all the possible variations. Eventually, the conversational agent will be presented with situations where the user input does not match any of the training phrases which it was trained with, thus leading to a non-recognition of the interaction, also known as fallback.

The goal of the present invention is to minimize the number of interactions that lead to fallback, by analysing the user utterances that were not recognized by the conversational agent and, if applicable, associating them with an existing intent, thus preventing their further occurrence as a fallback.

### SUMMARY OF THE INVENTION

The present invention describes a method that focuses on suggesting the addition of a previously occurring non-recognized interaction to an already existing intent, in the form of a new training phrase.

Given a conversational agent, its intents and respective training phrases, and a set of non-recognized user utterances, for each utterance a similarity search is conducted in order to retrieve the most similar training phrase. Subsequently, the retrieved training phrase is used to recover the associated intent, later proposed as a suggestion of where to add utterance that led to fallback in the form of a new training phrase.

### DESCRIPTION OF FIGURES

Figure 1 - diagram representation of the index creation and automatic intent suggestion processes used in the present invention, wherein the reference numbers represent:
   100 - process of obtaining the vector representations of a set of training phrases;
   101 - process of conducting a similarity search between the training phrases and the fallbacks.
Figure 2 - diagram representation of the index creation process used in the present invention, wherein the reference numbers represent:
   200 - process of gathering and performing pre-processing of the training phrases data set;
   201 - process of computing the training phrases vector representations;
   202 - process of creating a searchable index.
Figure 3 - diagram representation of the similarity search and automatic suggestion processes used in the present invention, wherein the reference numbers represent:
   300 - process of obtaining the vector representations of a set of fallbacks;
   301 - process of computing the fallbacks vector representations;
   302 - process of conducting a similarity search between the training phrases and the fallbacks;
   303 - process of performing an automatic intent suggestion.

### DETAILED DESCRIPTION

The following detailed description has references to the figures. Parts which are common in different figures have been referred to using the same numbers. Also, the following detailed description does not limit the scope of the disclosure.

The present invention provides a method to improve NLP techniques, proposing: 1) the
creation of an index composed by the vector representations of a set of training phrases gathered from a collection of intents; 2) an automatic suggestion, performed through a similarity search between the training phrases index (from step 1) and the vector representations of a set of previously occurring fallback interactions.

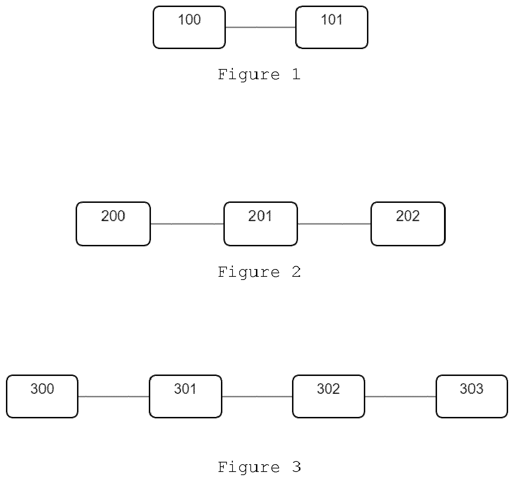

The purpose of the present invention is to build a conversational AI able to talk about a set of subjects with a minimum number of interactions that lead to fallback, where it is considered, a method composed by the following stages described in Figure 1: 1) corresponds to the gathering and pre-processing of the training phrases, model usage for the vector representations computation, and index creation (100); 2) corresponds to the gathering and pre-processing of the fallbacks, model usage for the vector representations computation, similarity search conducted between the training phrases and interactions that lead to fallback, and intent suggestion (101).

### Stage 1:

The first stage of the proposed method creates an index composed by the vector representations of training phrases collection.

A conversational agent is composed by a set of data that can be split into identifiable different conversational subjects. Each subject holds a sub-set of intents which are related with each other in a linguistic understanding domain and may include certain logical links between them. An intent is comprised of a data set of utterances, or training phrases, that define it.

The training phrases in this particular set must be encoded into vector representations by a given model, to later form a searchable index.

Prior to being encoded, as represented in Figure 2 at step 200, the training phrases are to be submitted to a pre-processing step where the removal of common punctuation and accentuation and predefined stop words is conducted, if desired. Common punctuation and accentuation can affect the encoding process results, due to their frequent occurrence. Similarly, stop words, usually articles, prepositions, pronouns or conjunctions, do not add information to the utterance to be encoded.

In addition to the removal of punctuation, accentuation and stop words, during the pre-processing step, different words across the training phrases that carry the same meaning, that is, that are synonyms, are replaced by a keyword. For instance, the words *hi* and *hey* would be replaced by *hello*, throughout all the training phrases.

At step 201, represented in Figure 2, the vector representations of the set of training phrases are to be computed. For this purpose, any pre-trained model capable of encoding text into high dimensional vectors, or embeddings, can be used.

An embedding is a point in some multidimensional semantic space that represents the meaning of a word or a collection of words, e.g., a sentence, such that words that are similar in meaning are closer in the semantic space. By combining the meaning with the definition according to prior usage of a word or sentence, an embedding is capable of fully capturing the meaning behind it.

Due to embeddings being points in a multidimensional space, also known as vectors, it is possible to compute the distance between two given points. For instance, given a pair of sentences, the semantic distance between the sentences can be determined by computing the distance between their vector representations, or embeddings, such that, the closer the vectors are, the most similar the two sentences are.

After computing the embeddings of each training phrase in the data set, these are to be stored in an index, as represented in Figure 2 at step 202. The index allows for an efficient similarity search of dense vectors, through the calculation of the distance between a given vector and a vector stored in the index. Distinct operations can be used for calculating the distance between a pair of vectors, such as Euclidean distance or dot product. Furthermore, different methods can be used for the similarity search process.

The purpose of the first stage of the proposed method is thus to create a searchable index containing the vector representations of the training phrases of a given conversational agent.

### Stage 2:

The second stage of the proposed method conducts a similarity search between the training phrases index and the fallbacks, through the respective representation vectors. The current stage also provides a suggestion composed by an interaction that led to fallback and an intent to which the fallback can be added to in the form of a new training phrase.

As represented in Figure 3, the first step in this stage is to apply a pre-processing step to the fallbacks dataset, containing the utterances that led to fallback when interacting with a given conversational agent. The pre-processing step of the fallbacks is of utmost importance, due to the utterances being derived from user inputs.

This step, represented in Figure 3 at step 300, identifies and removes irrelevant and duplicate fallbacks, such as utterances only composed by a single word with one or two letters, or utterances containing digits or symbols. In addition to the removal of irrelevant fallbacks, the pre-processing step described in the previous stage, represented in Figure 2 at step 200, that consists of removing punctuation, accentuation and stop words, and replacing synonyms, is also applied to the fallbacks data set.

At step 301, represented in Figure 3, after the pre-processing is conducted, the vector representations of the fallbacks are computed. This process is equivalent to the one described in detail at stage 1 for the training phrases dataset, represented at step 201 in Figure 2.

Having the training phrases index and the fallbacks vector representations, the index is queued with each fallback and the positions in the index of the k most similar training phrases are retrieved.

When queued with a given fallback, the index computes the dot product between the fallback and each training phrase, thus returning the k training phrases with the highest dot product result. Therefore, for each retrieved training phrase, it is also retrieved the respective dot product result.

If the dot product result is greater than a predefined value ranging from 0 to 1, the respective index position is used to obtain the corresponding training phrase and associated intent. The similarity search is thus conducted, as represented in Figure 3 at step 302.

Finally, at the final step 303 represented in Figure 3, the intent retrieved from the training phrase most similar to a given fallback would serve the purpose of a suggestion, as to where to add the fallback in the form of a new training phrase.

If the suggestion were to be accepted, the fallback utterance would be converted into a new training phrase and added to the retrieved intent. The addition of the new training phrases allows for a richer dataset and for an improvement of the performance of the conversational agent, that becomes further knowledgeable about different user utterances.

As will be clear to one skilled in the art, the present invention should not be limited to the embodiments described herein, and a number of changes are possible which remain within the scope of the present invention.

Of course, the preferred embodiments shown above are combinable, in the different possible forms, being herein avoided the repetition all such combinations.

### DESCRIPTION OF THE EMBODIMENTS

In the following an embodiment of the present invention being related to a method for natural language processing based on automatically suggesting an intent for each fallback utterance will be described. Said method is comprised of the following steps:
- the training phrases dataset is pre-processed (200).
- the pre-processed training phrases dataset is converted into embeddings (201), vectors that represent the meaning of words or sentences in some multidimensional semantic space and allow for the calculation of the distance between them and other vectors representing words or sentences.
- an index containing all the training phrases vector representations is created (202).
- the fallbacks dataset is pre-processed (300), similarly to the training phrases dataset (200).
- the pre-processed fallbacks dataset is converted into embeddings (301), similarly to the training phrases dataset (201).
- the created index (202) is queued for each fallback utterance and returns the top five most similar training phrases per fallback, along with the dot product result (302) .
- a suggestion is made per fallback, based on the intent associated with the most similar training phrase. The fallback utterance is converted into a new training phrase for the retrieved intent (303).

## Claims

1. computer-implemented method capable of automatically suggesting an intent to a fallback in a set of training phrases, comprising:
- pre-processing of the phrases dataset (200) adapted to optimize the encoding of said phrases in a machine learning model;
- training the phrases dataset with a machine learning model adapted to convert said phrases into embeddings (201) which allow the calculation the distance said embeddings and other similar representations of words or sentences;
- creating and index of the training phrases (202);
- pre-processing the fallbacks dataset (300) adapted to optimize encoding of said fallbacks in a machine learning model;
- querying said training phrases index (202) for each fallback utterance (301) and returning the hierarchy of similarity score of said training phrases per fallback;
- suggesting the most similar training phrase per fallback;
- converting each fallback into a new training phrase for the retrieved intent (303)

2. A computer-implemented method capable of automatically suggesting an intent to a fallback in a set of training phrases according to claim 1 where the pre-processing of the training phrases includes the removal of common punctuation, accentuation and a set of predefined stop words.

3. A computer-implemented method capable of automatically suggesting an intent to a fallback in a set of training phrases according to claims 1 and 2 where the predefined stop words set is comprised of articles, prepositions, pronouns and conjunctions.

4. A computer-implemented method capable of automatically suggesting an intent to a fallback in a set of training phrases according to claims 1 to 3 where the pre-processing of the training phrases includes a second phase where words among the training phrases are labeled as synonyms and replaced by a common keyword.

5. A computer-implemented method capable of automatically suggesting an intent to a fallback in a set of training phrases according to claim 1 where the pre-processing of the training drawbacks is executed similarly to the pre-processing of the phrases.

6. A computer-implemented method capable of automatically suggesting an intent to a fallback in a set of training phrases according to claim 1 where the similarity score of the training phrases index (202) is calculated using the dot product between the fallback and each training phrase.
